# EUROPÄISCHE PATENTSCHRIFT

(11) **EP 3 580 168 B1**
(45) Veröffentlichungstag und Bekanntmachung des Hinweises auf die Patenterteilung: **25.11.2020**
(21) Anmeldenummer: 18703981.3
(22) Anmeldetag: 07.02.2018
(51) Int. Cl.: C01B 17/80, B01D 53/86, B01D 53/88, B01J 8/04, B01J 8/00

(54) **KONVERTER FÜR KONVERTIERUNG VON SO2 ZU SO3**
CONVERTER FOR CONVERTING SO2 INTO SO3
CONVERTISSEUR POUR LA CONVERSION DE SO2 EN SO3

(30) Priorität: 07.02.2017 DE 202017100630 U
(43) Veröffentlichungstag der Anmeldung: 18.12.2019
(73) Patentinhaber: Hugo Petersen GmbH, 65203 Wiesbaden (DE)
(72) Erfinder: FANI YAZDI, Sayyed Ahmad, 65189 Wiesbaden (DE); SCHULZE, Axel, 65510 Idstein/Heftrich (DE); NILL, Peter, 55234 Bechtolsheim (DE)
(74) Vertreter: Tesch, Sabine
(86) Internationale Anmeldenummer: PCT/EP2018/053014
(87) Internationale Veröffentlichungsnummer: WO 2018/146121

(56) Entgegenhaltungen:
- DE-A1- 3 137 474
- DE-C- 851 105
- DE-T2- 69 502 611
- US-A- 4 855 111
- US-A1- 2008 056 968
- US-A1- 2012 156 111
- US-B1- 6 471 861

## Beschreibung

Die Erfindung betrifft einen Membranboden für einen Kontaktkessel, insbesondere für die Oxidation von SO₂ zu SO₃, und einen Kontaktkessel sowie die Verwendung eines solchen Kontaktkessels für die Konvertierung von SO₂ zu SO₃.

### Hintergrund der Erfindung

Zur technischen Herstellung von Schwefelsäure wird heute hauptsächlich das sogenannte Kontaktverfahren eingesetzt. Dabei wird Schwefeldioxid SO₂ in Gegenwart mindestens eines Katalysators unter Freisetzung von Wärme zu Schwefeltrioxid SO₃ oxidiert, welches in Verbindung mit Wasser zu Schwefelsäure führt. Die Umsetzung des SO2 zu SO3 erfolgt in einem sogenannten Kontaktkessel. Ein Kontaktkessel ist eine Hauptkomponente in der Schwefelsäureanlage und wird auch als "Konverter" bezeichnet.

In einem Kontaktkessel sind Roste übereinander angeordnet, auf denen eine Katalysatorschüttung aufgebaut wird. Diese Roste werden teilweise auch als "Horden" oder "Konverterböden" bezeichnet. Streng genommen besteht eine komplette "Horde" aus einem Membranboden,
Intertfüllkörpern, Katalysator, Gasein- und austrittstutzen oder -öffnungen sowie Bodenbelech beziehungsweise Trennboden, welcher die Trennung zwischen zwei Horden gewährleistet. Einer von diesen oben angesprochenen Rosten ist ein "Membranboden". Zwischen den Horden beziehungsweise Membranböden können Kühlzonen angeordnet sein. Die Durchlässigkeit der Auflagefläche des Katalysators kann in unterschiedlicher Weise realisiert werden, beispielsweise durch ein Blech, das mit Öffnungen beziehungsweise Löchern versehen ist (Membran) oder ein Gitter. Eine Horde besteht damit aus einer äußeren Begrenzung, dem Mantel, und der Auflagefläche zur Aufnahme des Katalysators. Eine Horde kann auch eine innere Begrenzung, insbesondere ein Zentralrohr, aufweisen. Ferner weist eine Horde eine Öffnung für die Zuführung von SO₂-haltigem Gas auf. Diese Öffnung kann im inneren der Horde zentral angeordnet sein, beispielsweise als Zentralrohr. Diese Öffnung kann auch in der äußeren Begrenzung der Horde angeordnet sein, beispielweise als Maul.

Die Herstellung des Kontaktkessels ist kostenintensiv und direkt proportional zum Gewicht des Kontaktkessels.

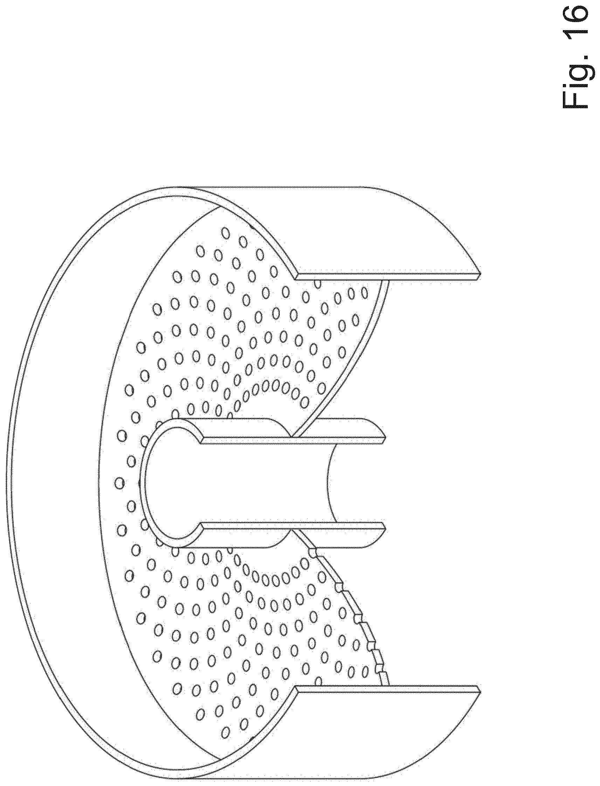

Bei den existierenden Membran-Horden ist das Hordenblech direkt mit dem Zentralrohr und dem Mantel verbunden, um die gesamten Lasten sowie Spannungen in den Mantel sowie in das Zentralrohr einzuleiten. Eine derartige Hordenmembran ist in Figur 16 schematisch dargestellt. So haben Zentralrohr und Mantel nicht nur die gesamte Last von der Hordenkontaktmasse aus der Katalysatorschüttung sowie die resultierenden Kräfte aus der Druckdifferenz um die Horde zu tragen, sondern auch radiale Zugspannungen und radiale Kräfte zur bewältigen, die aus dem Hordenblech am Mantel und am Zentralrohr wirken. Daher muss ein sogenannter "Beulnachweis" für den Mantel sowie für das Zentralrohr erbracht werden, um die Tragsicherheit der jeweiligen Konstruktion zu bestätigen. So wird beim Bau des Kontaktkessels eine größere Materialstärke für Mantel sowie Zentralrohr eingesetzt, was einen Nachteil für solche Kontaktkessel darstellt. Das Hordenblech selbst ist als ein Membranboden angefertigt, welcher sich kaum von der Materialstärke von einem Hordenblech in einem Kontaktkessel mit einem von unten gestütztem Hordenrahmen unterscheidet, was den Vorteil eines solchen anderen bekannten Kontaktkessels darstellt.

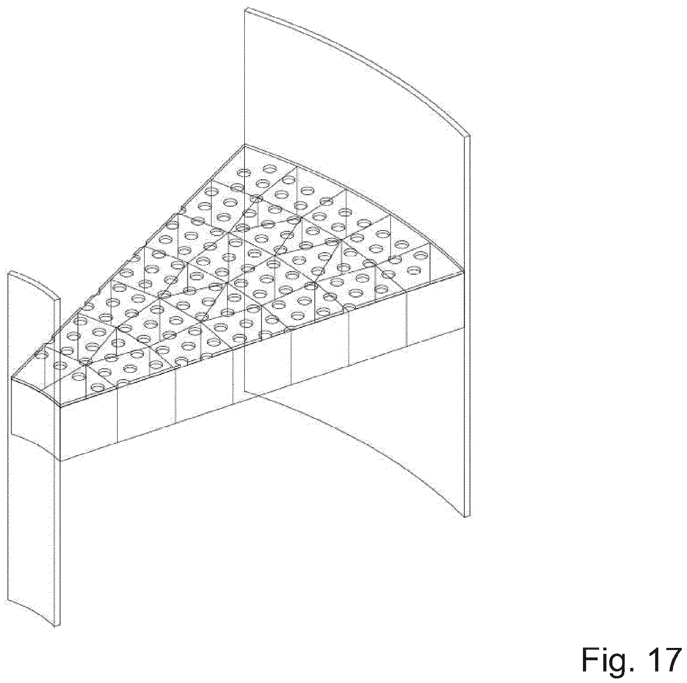

Dagegen haben die Kontaktkessel mit Hordenrahmen entsprechend der schematischen Darstellung in Figur 17 den Vorteil, die gesamten Kräfte aus der Horde vertikal aufzunehmen und sie vertikal an Mantel sowie Zentralrohr einzuleiten. Durch vertikal ankommende Lasten am Mantel sowie Zentralrohr kommen keine radialen Kräfte zustande, was einen Beulnachweis für den Kontaktkessel überflüssig macht. Dadurch kommt der Mantel des Kontaktkessels sowie das Zentralrohr mit einer kleineren Materialstärke zurecht, was hier einen Vorteil darstellt. Die Nachteile, die ein solcher Hordenrahmen im Vergleich zu Membran-Horden hat, sind zusätzliches Hordengewicht durch den Hordenrahmen, zusätzlicher Bauhöhe der Horde durch sich addierende Hordenrahmenhöhen und die dadurch resultierende Gesamthöhe des Kontaktkessels, was zu einem höheren Gesamtgewicht des Kontaktkessels beiträgt.

Es ergibt sich daraus eine Aufgabe der Erfindung, die mechanische Belastung des Mantels und/oder des Zentralrohrs einer Horde eines Kontaktkessels zu verringern. Die Aufgabe der Erfindung liegt insbesondere darin, eine Möglichkeit zu schaffen, einerseits die radialen Kräfte und die radialen Spannungen zu vermeiden, ohne das Membran-Horden-Design zu verlassen, und andererseits die Gesamthöhe des Kontaktkessels so klein wie möglich zur halten, trotz des Beibehaltens der Designvorteile von Hordenrahmen.

US 6471861 B1 offenbart Böden zum Tragen von z.B. festen Adsorbenzien oder Katalysatoren in Kolonnen.

### Lösung durch die Erfindung

Die Erfindung löst diese Aufgaben in überraschend einfacher Weise, wobei sie zur Ausbildung eines erfindungsgemäßen Membranbodens für einen Kontaktkessel, insbesondere für die Oxidation von SO₂ zu SO₃, über Segmente verfügt, wobei jedes Segment in Aufsicht parallel zu einer Längsachse L eine Projektionsfläche hat, die ein Ausschnitt aus einem Kreisring um einen Mittelpunkt M ist, wobei die Längsachse L durch den Mittelpunkt M verläuft, wobei jedes Segment eine dem Mittelpunkt zugewandte Innenkante, eine radial vom Mittelpunkt aus gesehen der Innenkante gegenüberliegende Außenkante sowie zwei Seitenkanten aufweist, wobei die Seitenkanten in radialer Richtung vom Mittelpunkt aus gesehen von der Innenkante zur Außenkante die Projektionsfläche des Segments seitlich begrenzen.

Ein derartiges sozusagen loses Segment erlaubt es, einen Membranboden beziehungsweise eine sogenannte "Horde" derart aufzubauen, dass im Betrieb auf den Membranboden wirkende Kräfte nicht in Umfangsrichtung bezogen auf die Längsachse und auch nicht radial bezogen auf die Längsachse die Fläche des Membranbodens belastet, auf der der Katalysator aufliegt. Damit schafft die Erfindung die Möglichkeit, die mechanische Belastung des Mantels und/oder des Zentralrohrs einer Horde eines Kontaktkessels zu verringern. Durch die Vermeidung radialer Kräfte und Spannungen beim Aufbau eines Kontaktkessels können zudem Material und damit Gewicht und Kosten eingespart werden.

Die Erfindung stellt einen Membranboden für einen Kontaktkessel, insbesondere für die Oxidation von SO₂ zu SO₃, zur Verfügung, welcher zumindest zwei oben beschriebene Segmente umfasst, wobei zur Bildung des Membranbodens die zumindest zwei Segmente in einer Ebene durch ihre Projektionsflächen einander benachbart angeordnet sind und seitlich entlang ihrer radialen Seitenkanten auf Halteflächen aufliegen, wobei sie mit diesen fest verbunden sind, wobei die Halteflächen durch eine Haltevorrichtung bereitgestellt werden, welche im Wesentlichen die äußere Form eines T-Trägers oder Y-Trägers oder Kreuzträgers hat, wobei die seitlichen Vorsprünge des T-Trägers oder Y-Trägers oder Kreuzträgers die Halteflächen bilden und die Länge des T-Trägers oder Y-Trägers oder Kreuzträgers der Länge der Haltevorrichtung entspricht und gleich lang oder bevorzugt länger ist als die Seitenkante des Segments.

Ein Kreuzträger hat in Richtung seiner Hauptausdehnung gesehen im Wesentlichen ein Profil eines "+" ("Plus"-Zeichens).

Durch die Segmentbauweise des Hordenblechs heben sich im Betrieb die umfangsgerichteten Zugspannungen gegenseitig mit den aus den benachbarten Segmenten resultierenden Zugspannungen auf. So wird in konstruktiv einfacher Weise sichergestellt, dass in Umfangsrichtung im Wesentlichen keine Zugspannungen auf die Befestigungsvorrichtungen, insbesondere im T-Träger oder Y-Träger oder Kreuzträger, anfallen.

In einer vorteilhaften Weiterbildung der Erfindung ist vorgesehen, dass der Membranboden zwei Balkenringe aufweist, von denen einer zum Umlauf an der Innenseite eines Mantels eines Kontaktkessels und der andere zum Umlauf an der Außenseite eines Zentralkörpers eines Kontaktkessels ausgebildet ist, wobei die beiden Balkenringe insbesondere in einer Richtung senkrecht zur Längsachse gesehen ein einer Ebene liegen, wobei wenigstens ein Segment, vorzugsweise mehr als ein Segment, besonders bevorzugt alle Segmente auf den beiden Balkenringen frei aufliegt beziehungsweise aufliegen. Die Segmente bilden dabei einen Kreisring, wobei die Segmente an ihrer radialen Seite direkt oder an den Befestigungsvorrichtungen befestigt, beispielsweise verschweißt oder verschraubt, sind, und an den Balkenringen am Umfang des Mantels beziehungsweise Zentralkörpers frei aufliegen. Im Betrieb sind sie dabei von der Katalysatormasse abgedeckt.

Insbesondere schließt dabei ein Balkenring den Spalt zwischen Mantel und Hordensegmentblech und/oder der andere Balkenring schließt den Spalt zwischen Zentralkörper und Hordensegmentblech. Mit Hilfe der Balkenringe wird damit ein in einer Richtung parallel zur Längsachse im Wesentlichen komplett geschlossener Membranboden geschaffen, welcher einen Gasdurchtritt durch die Katalysatorschüttung allein durch die Öffnungen der Membran erlaubt und damit zu einem definierten Umströmen der Katalysatorpartikeln in der Schüttung auf dem Membranboden beiträgt und gleichzeitig nicht erlaubt, dass die Katalysatorpartikeln durch den ringförmigen Spalt herunter rieseln.

In einer weiteren vorteilhaften Ausführungsform der Erfindung ist vorgesehen, dass jeweils zwei einander benachbarte Segmente symmetrisch in Bezug auf eine Achse radial zur Längsachse zueinander angeordnet sind. Dadurch wird eine Aufhebung der in Umfangsrichtung wirkenden Lasten ermöglicht.

Die Erfindung stellt zudem einen Kontaktkessel, insbesondere für die Oxidation von SO₂ zu SO₃, zur Verfügung, welcher im Wesentlichen zylinderförmig um eine Längsachse ausgebildet ist und außen von einem rotationssymmetrisch um die Längsachse verlaufenden Mantel und innen von einem rotationssymmetrisch um die Längsachse verlaufenden Zentralkörper, nämlich einem Zentralrohr oder einer Zentralstange, begrenzt wird, wobei der Kontaktkessel zumindest einen oben beschriebenen Membranboden zwischen dem Zentralkörper und dem Mantel in einer Ebene senkrecht zur Längsachse aufweist, wobei zumindest zwei Haltevorrichtungen jeweils zwischen dem Zentralkörper und dem Mantel unter Ausbildung von jeweils zumindest einer Befestigungsfläche derart befestigt sind, dass über die Befestigungsfläche in den Zentralkörper beziehungsweise in den Mantel im Wesentlichen allein in einer Richtung parallel zur Längsachse Spannung übertragen wird, welche aus einer Belastung der Segmente in einer Richtung senkrecht auf ihre Projektionsfläche resultiert. Damit ist die mechanische Belastung des Mantels und/oder des Zentralkörpers eines Kontaktkessels zu verringern. Durch die Vermeidung radialer Kräfte und Spannungen beim Aufbau des Kontaktkessels können zudem einerseits Material und damit Gewicht, und andererseits Ingenieuraufwand und damit gebundene Kosten eingespart werden.

Jedes Segment ist über die Halteflächen an jedem ihm benachbarten T-Träger oder Y-Träger oder Kreuzträger entlang jeder radialen Seitenkante befestigt, insbesondere geschweißt, geschraubt und/oder verankert. So kann die Stabilität innerhalb eines Membranbodens und seine Steifigkeit erhöht werden.

Gemäß einer vorteilhaften Weiterbildung der Erfindung ist vorgesehen, dass zumindest eine Haltevorrichtung im Betrieb des Kontaktkessels in die Katalysatormasse integriert ist. Wie unten noch genauer erläutert wird, ermöglicht diese Bauweise, bei welcher die T-Träger und/oder Y-Träger und/oder Kreuzträger vollständig in Katalysatormasse integriert sind eine kürzere, das heißt weniger hohe, Bauweise des Kontaktkessels.
Die Erfindung bietet verschiedene Möglichkeiten zur konstruktiven Ausgestaltung des Membranbodens. In besonderes einfacher Weise können diese Möglichkeiten über eine Gestaltung der einzelnen Segmente realisiert werden. Je nachdem, welche Katalysatormenge auf einem Membranboden bereitgestellt werden soll und welche Form und Größe die Katalysatorpartikeln haben, kann beispielsweise jedes Hordenblechsegment im Wesentlichen flach sein. Es kann aber auch jedes Hordenblechsegment eine Wölbung aufweisen.

In Abstimmung auf die Einbausituation des Kontaktkessels vor Ort können im Rahmen der Erfindung die Anschlüsse für Einlass und Auslass des den Kontaktkessel im Betrieb durchströmenden Gases positioniert werden. So ist gemäß einer Ausführungsform der Erfindung vorgesehen, dass der Kontaktkessel seitlich zumindest einen Stutzen für den Gaseintritt und zumindest einen Stutzen für den Gasaustritt im Betrieb des Kontaktkessels aufweist, wobei der oder die Stutzen insbesondere seitlich in den Mantel des Kontaktkessels münden.

Es ist aber auch möglich, dass der Kontaktkessel zumindest eine Öffnung im Zentralrohr oder im Mantel aufweist, durch welche im Betrieb des Kontaktkessels der Gaseintritt erfolgen kann, und/oder dass der Kontaktkessel zumindest eine Öffnung im Zentralrohr oder im Mantel aufweist, durch welche im Betrieb des Kontaktkessels der Gasaustritt erfolgen kann. Dann sind der Gaseintritt beziehungsweise der Gasaustritt durch Gaseinlässe beziehungsweise Gasauslässe eingebettet in das Zentralrohr, und die Gasströmung kann radial in den Kontaktkessel einfließen beziehungsweise aus dem Kontaktkessel ausfließen. Damit wird außen am Kontaktkessel Platz eingespart, da nach außen ragende Stutzen entfallen. So wird eine besonders kompakte Bauweise ermöglicht.

Im Rahmen der Erfindung kann der Kontaktkessel insbesondere bereits aus einem einzigen Membranboden mit Mantel und Zentralkörper bestehen. Der Kontaktkessel kann dabei über die Anzahl der Membranböden flexibel an die jeweilige Aufgabe in der Anwendung angepasst werden. Dazu ist vorgesehen, dass der Kontaktkessel zumindest einen Membranboden, insbesondere zumindest zwei Membranböden, aufweist und insbesondere aus einem bis sechs Membranböden besteht, die vertikal übereinander angeordnet sind. In einer bevorzugten Ausführungsform ist vorgesehen, dass der Kontaktkessel vier oder fünf Membranböden aufweist und insbesondere zur Verwendung für die Konvertierung von SO₂ zu SO₃ nach dem Doppelkontaktverfahren vorgesehen ist, oder dass der Kontaktkessel zwei bis vier Membranböden aufweist und insbesondere zur Verwendung für die Konvertierung von SO₂ zu SO₃ nach dem Einfachkontaktverfahren vorgesehen ist. Das Einfachkontaktverfahren wird auch als Kontaktverfahren bezeichnet. Das Doppelkontaktverfahren zur Herstellung von Schwefelsäure ist eine Weiterentwicklung des Einfachkontaktverfahrens, wobei aus dem Gas nach dem Durchgang durch mehrere Membranböden das SO₃ teilweise bis zu vollständig entfernt und das verbliebene SO₂ zum nächsten Membranboden geführt wird. Hier erfolgt der weitere Umsatz zu SO₃.

Der Kontaktkessel ist im Rahmen der Erfindung vorteilhafterweise für die Verwendung in einem Temperaturbereich zwischen Umgebungstemperatur und 650°C ausgelegt und ermöglicht so auch den Einsatz von Katalysatoren mit hohem Wirkungsbereich oberhalb von 600°C wie etwa Vanadiumpentoxid.

Die Erfindung betrifft damit auch die Verwendung eines Kontaktkessels nach einem der Ansprüche 5 bis 13 für die Konvertierung von SO₂ zu SO₃. insbesondere liegen dabei die Temperaturen während der Anheizphase im Bereich zwischen Umgebungstemperatur und 500°C und während des Betriebs zwischen 350°C bis 650°C.

Die Erfindung wird nachfolgend unter Bezugnahme auf die beigefügten Zeichnungen anhand von Ausführungsbeispielen näher erläutert. Gleiche und ähnliche Bauteile sind dabei mit gleichen Bezugszeichen versehen, wobei die Merkmale der verschiedenen Ausführungsbeispiele miteinander kombiniert werden können. Es zeigen:
- Figur 1: eine schematische dreidimensionale Darstellung einer ersten Ausführungsform der Erfindung der Horde mit radialsymmetrischen Membransegmentblechen,
- Figur 2: eine schematische Darstellung in Vogelperspektive einer erfindungsgemäßen Horde in Membransegmentblechbauweise,
- Figur 3: eine schematische Darstellung der Auflage eines Hordensegmentbleches auf dem Balken am Mantel sowie am Zentralrohr,
- Figur 4: eine schematische Darstellung vom Konverter ohne Mantel in Seitenansicht,
- Figur 5: eine schematische perspektivische Darstellung der Verbindung der Balken am Mantel und eines darauf freiliegenden Trägerbodens eines Segments des Membranbodens,
- Figur 6: eine schematische perspektivische Darstellung der Verbindung zwischen dem Trägerboden eines Segments des Membranbodens, einem T-Träger sowie der Verbindung zwischen dem T-Träger und dem Mantel und Verbindung der Balken am Zentralkörper und eines darauf freiliegenden Trägerbodens eines Segments des Membranbodens,
- Figur 7: eine schematische perspektivische Darstellung der Verbindung zwischen T-Träger und Trägerboden zweier Segmente des Membranbodens,
- Figur 8: eine schematische perspektivische Darstellung eines Segmentträgerbodens mit vorgewölbtem Trägerboden und T-Träger,
- Figur 9: eine schematische perspektivische Darstellung einer alternativen Ausführungsform eines Segmentträgerbodens mit Y-Träger,
- Figur 10: eine schematische perspektivische Darstellung einer Horde mit Gaseintritt durch radiale Öffnungen in Zentralrohr und Gasaustritt am Mantel,
- Figur 11: eine schematische perspektivische Darstellung einer weiteren Ausführungsform einer Horde mit Gaseintritt im Mantel und Gasaustritt durch Öffnungen in Zentralrohr,
- Figur 12: eine schematische perspektivische Darstellung einer weiteren Ausführungsform einer Horde mit Gaseintritt sowie -austritt am Mantel mit gerundeten Mäulern,
- Figur 13: eine schematische Darstellung zur Aufhebung umfangsgerichteter Kräfte und Zugspannungen durch die erfindungsgemäße radialsymmetrische Bauweise,
- Figur 14: eine schematische exemplarische Darstellung einer ersten Ausführungsform eines Kontaktkessels mit vier Horden,
- Figur 15: eine schematische exemplarische Darstellung einer weiteren Ausführungsform eines Kontaktkessels mit vier Horden und einem integrierten Gas-Gas-Wärmetauscher im Zentralrohr,
- Figur 16: eine schematische perspektivische Darstellung einer bekannten Hordenmembran,
- Figur 17: eine schematische exemplarische Darstellung eines Schnittes von einem bekannten Hordenrahmen und darauf liegende Hordenboden,

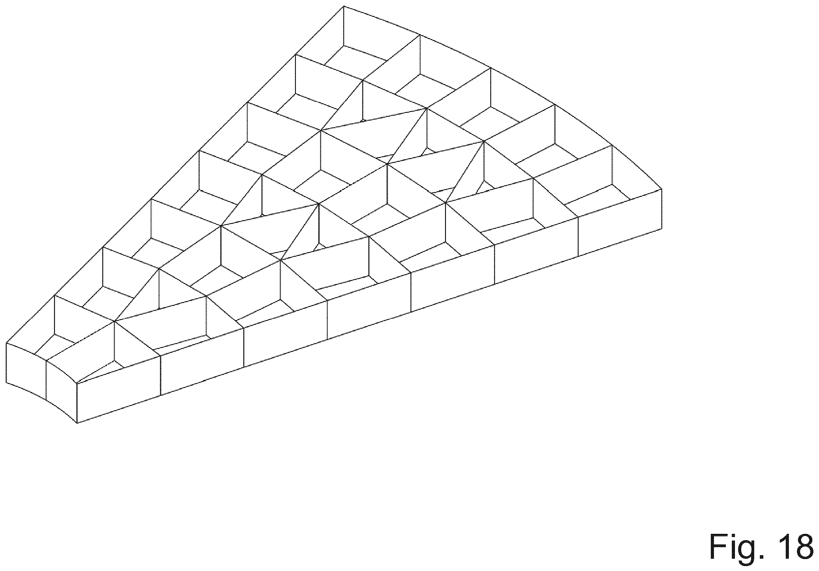

- Figur 18: eine schematische exemplarische Darstellung von einem Segment eines bekannten Hordenrahmens,
- Figur 19: eine schematische Darstellung einer Ausführungsform der erfindungsgemäßen Haltevorrichtung in Form eines T-Trägers und
- Figur 20: zwei schematische Darstellungen von Ausführungsformen der Verbindung zwischen Kreuzträgern und Segmenten des Membranbodens.

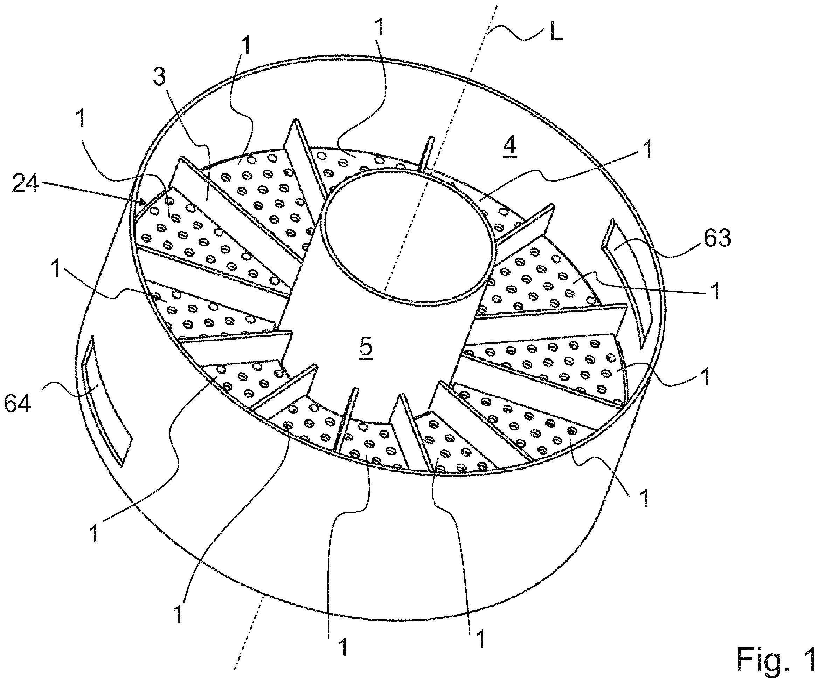

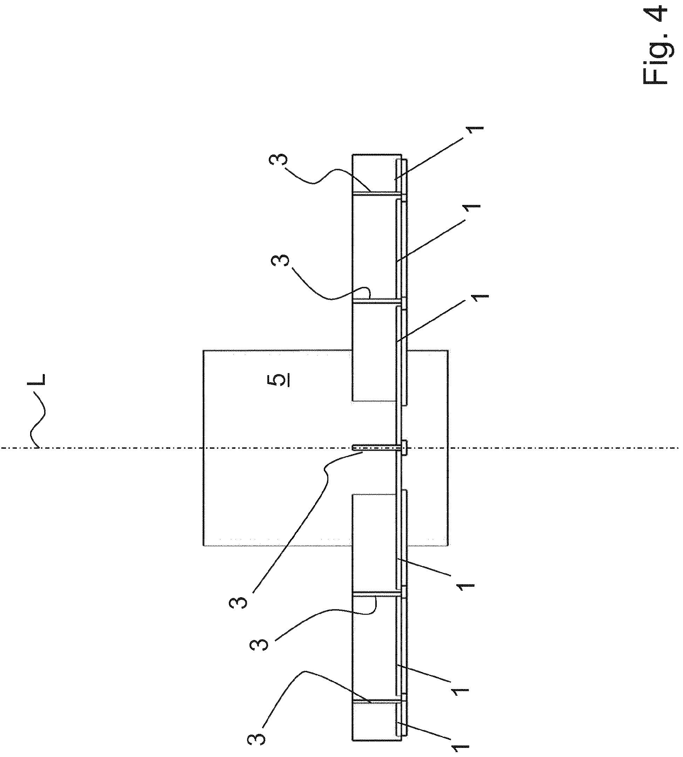

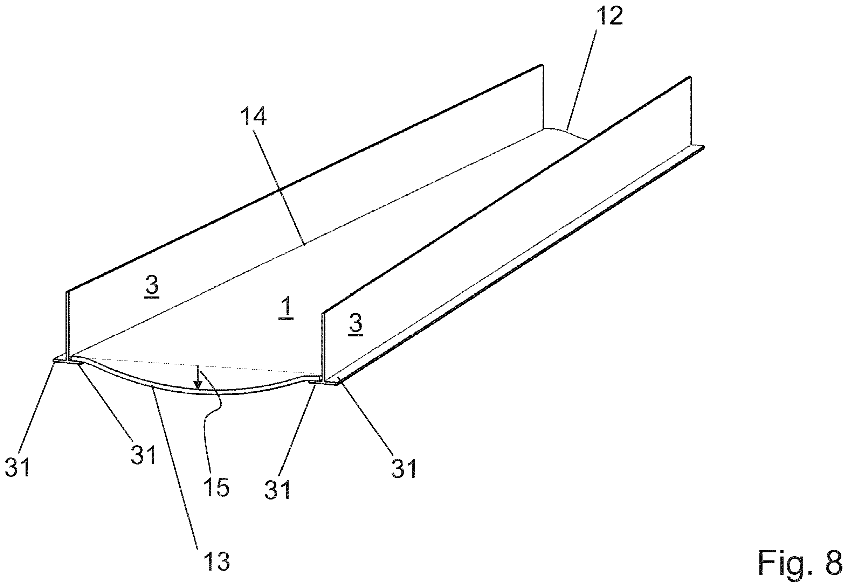

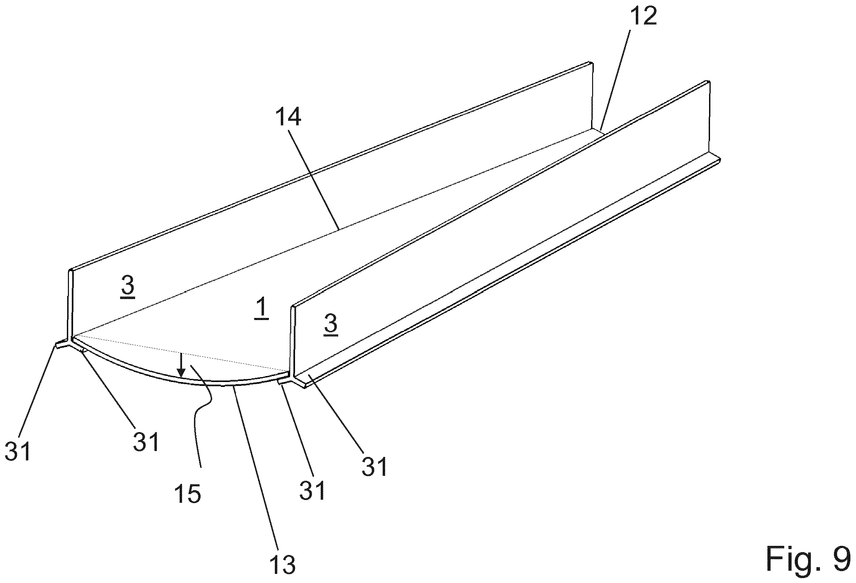

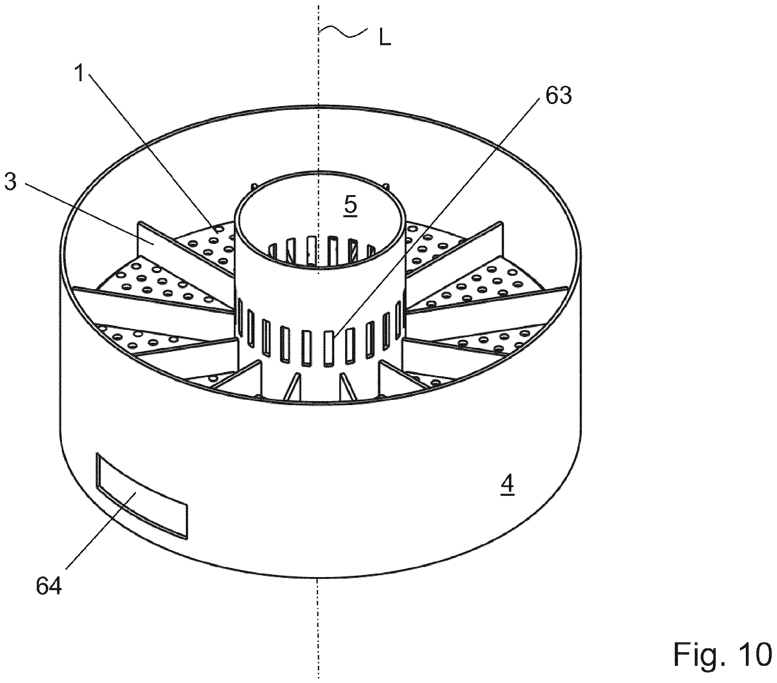

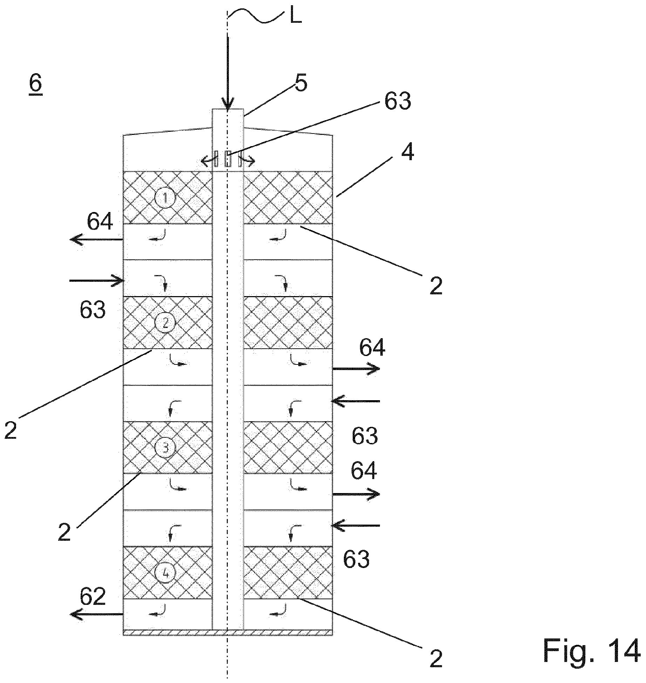

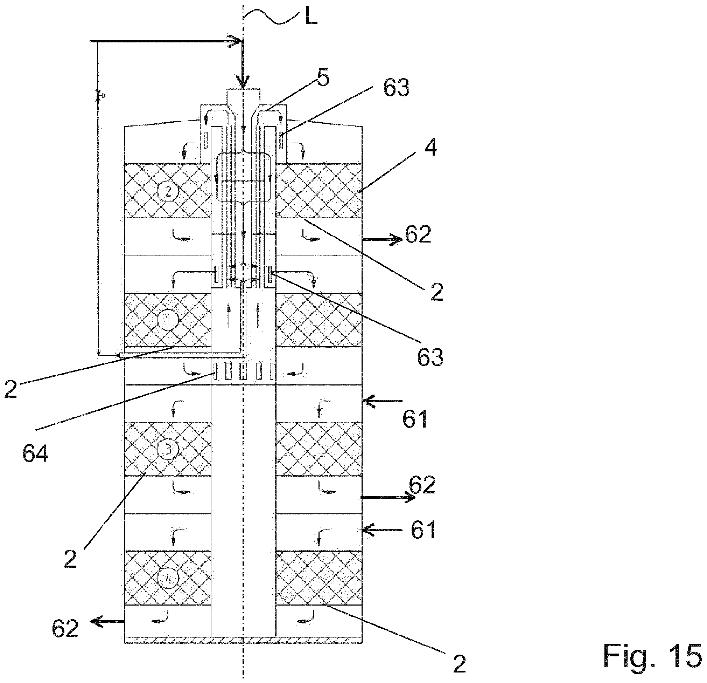

In Bezug auf die Figuren 8 und 9 werden Ausführungsformen des Segments 1 für einen erfindungsgemäßen Membranboden 2 gezeigt. In Bezug auf die Figuren 1 bis 7 sowie 10 bis 13 wird im Folgenden der Aufbau eines erfindungsgemäßen Membranbodens 2 beschrieben. Dieser wird teilweise auch als "Horde" bezeichnet. Ein Kontaktkessel 6 wird insbesondere durch Übereinanderstapeln mehrerer solcher Horden 2 ausgebildet. Beispiele für Kontaktkessel 6 werden im Folgenden in Bezug auf die Figuren 14 und 15 beschrieben. In den Figuren 10 bis 12 werden Membranböden 2 beziehungsweise Horden dargestellt, welche Öffnungen 63, 64 für den Gaseintritt beziehungsweise Gasaustritt im Betrieb eines Kontaktkessels 6 mit mindestens einer solchen Horde 2 aufweisen. Derartige Öffnungen können auch als "Mäuler" bezeichnet werden.

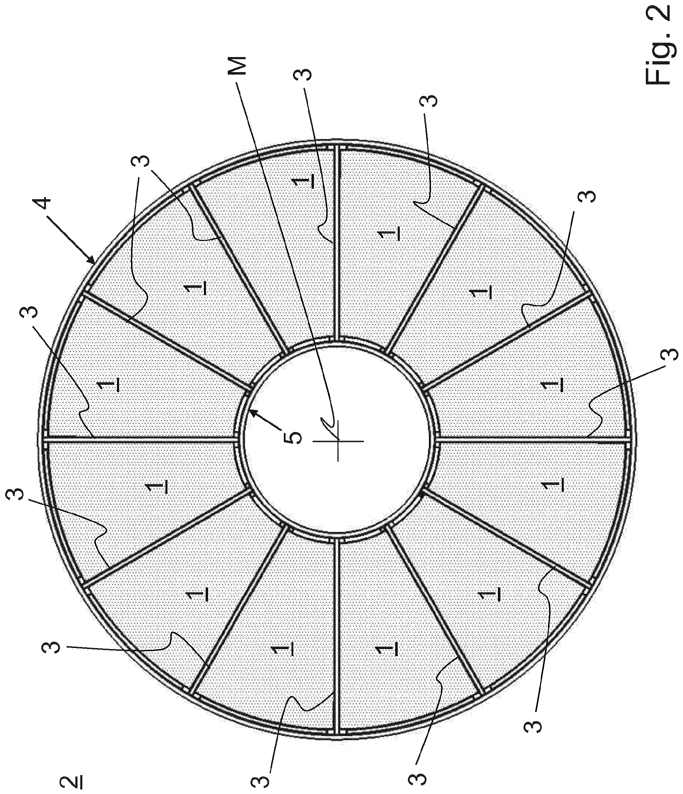

In den Figuren 8 und 9 ist jeweils ein Segment 1 zur Ausbildung eines Membranbodens 2 für einen Kontaktkessel 6, insbesondere für die Oxidation von SO₂ zu SO₃ schematisch dargestellt. Dabei hat das Segment 1 in Aufsicht parallel zu einer Längsachse L (siehe beispielsweise Figur 1) eine Projektionsfläche, die ein Ausschnitt aus einem Kreisring um einen Mittelpunkt M (siehe beispielsweise Figur 2) ist, wobei die Längsachse L durch den Mittelpunkt M verläuft. das Segment 1 weist eine dem Mittelpunkt M zugewandte Innenkante 12, eine radial vom Mittelpunkt aus gesehen der Innenkante 12 gegenüberliegende Außenkante 13 sowie zwei Seitenkanten 14 auf, wobei die Seitenkanten 14 in radialer Richtung vom Mittelpunkt aus gesehen von der Innenkante 12 zur Außenkante 13 die Projektionsfläche des Segments 1 seitlich begrenzen.

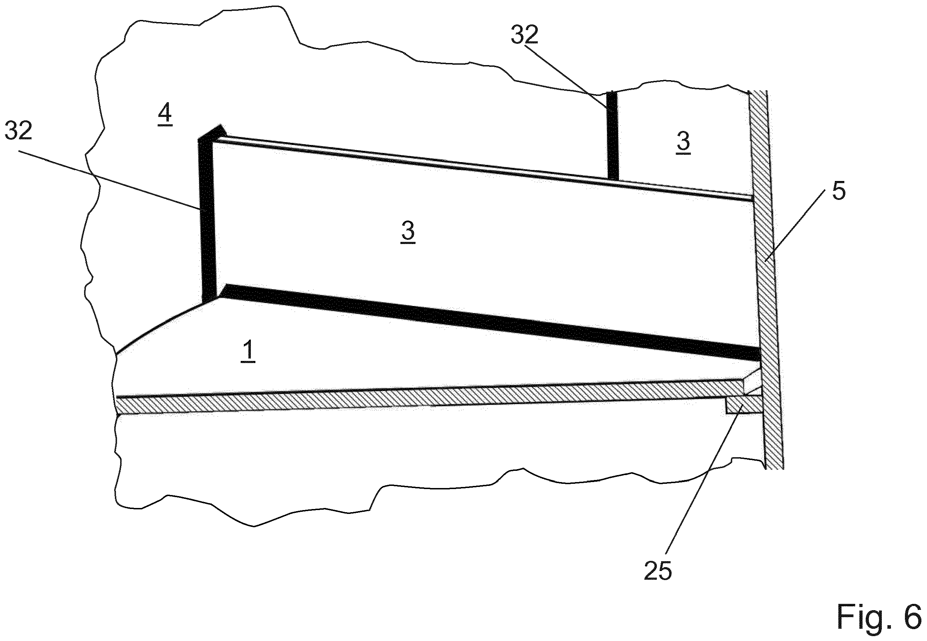

Die Figuren zeigen des Weiteren einen Membranboden 2 für einen Kontaktkessel 6, insbesondere für die Oxidation von SO₂ zu SO₃, welcher zumindest zwei derartige Segmente 1 umfasst (vergleiche beispielsweise Figur 2). Zur Bildung des Membranbodens 2 sind die zumindest zwei Segmente 1 in einer Ebene durch ihre Projektionsflächen einander benachbart angeordnet und liegen seitlich entlang ihrer radialen Seitenkanten 14 auf Halteflächen 31 auf. Die Halteflächen 31 werden durch eine Haltevorrichtung 3 bereitgestellt. Die Haltevorrichtung 3 hat wie in Figur 8 und Figur 9 dargestellt im Wesentlichen die äußere Form eines T-Trägers oder Y-Trägers, wobei die seitlichen Vorsprünge des T-Trägers oder Y-Trägers die Halteflächen 31 bilden und die Länge des T-Trägers oder Y-Trägers der Länge der Haltevorrichtung 3 entspricht und gleich lang oder bevorzugt länger ist als die Seitenkante 14 des Segments 1. Unter Verwendung eines solchen Membranbodens 2 mit zumindest zwei oben beschriebenen Segmenten 1 kann insbesondere für die Oxidation von SO₂ zu SO₃ ein Kontaktkessel 6 zusammengestellt werden. In den Figuren 14 und 15 sind Ausführungsbeispiele für einen derartigen Kontaktkessel 6 dargestellt. Der Kontaktkessel 6 ist im Wesentlichen zylinderförmig um eine Längsachse L ausgebildet und wird außen von einem rotationssymmetrisch um die Längsachse L verlaufenden Mantel 4 und innen von einem rotationssymmetrisch um die Längsachse L verlaufenden Zentralkörper 5, nämlich einem Zentralrohr oder einer Zentralstange, begrenzt. Der Kontaktkessel weist zumindest einen oben beschriebenen Membranboden 2 zwischen dem Zentralkörper 5 und dem Mantel 4 in einer Ebene senkrecht zur Längsachse L auf. Zumindest zwei Haltevorrichtungen 3 sind jeweils zwischen dem Zentralkörper 5 und dem Mantel 4 unter Ausbildung von jeweils zumindest einer Befestigungsfläche 32 (vergleiche Figur 6) derart befestigt, dass über die Befestigungsfläche 32 in den Zentralkörper 5 beziehungsweise in den Mantel 4 im Wesentlichen allein in einer Richtung parallel zur Längsachse L Kraft und Spannung übertragen wird, welche aus einer Belastung der Segmente 1 in einer Richtung senkrecht auf ihre Projektionsfläche resultiert.

Die in Figur 6 in Kontakt mit dem Mantel 4 sichtbaren Befestigungsflächen 32 sind Schweißnähte zur Verbindung der Befestigungsvorrichtungen 3 mit dem Mantel. In gleicher Weise können die Befestigungsvorrichtungen 3 auch mit dem Zentralkörper 5 verbunden sein.

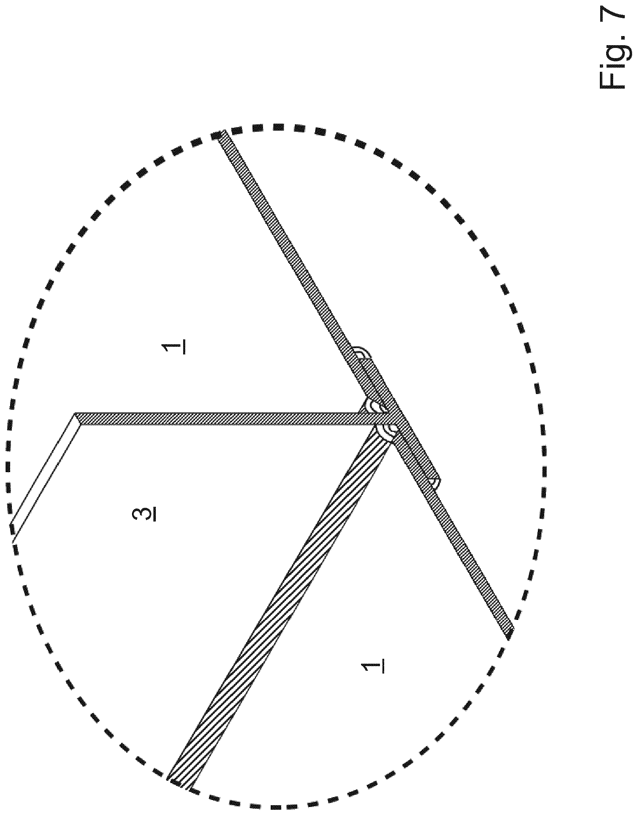

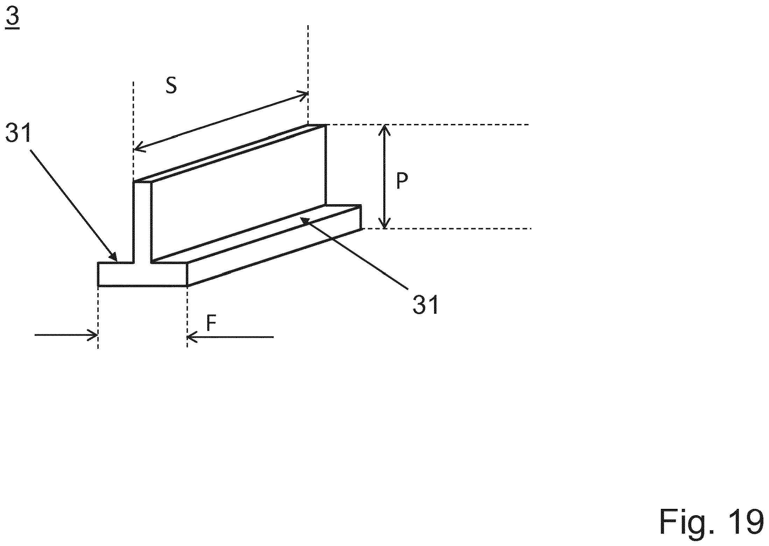

Damit die radialen Kräfte und Spannungen nicht in den Mantel 4 und das Zentralrohr 5 des Kontaktkessels 6 eingeleitet werden, ist das neue Hordenblech 2 gemäß der Erfindung in radialsymmetrischen Membran-Segmenten 1 angefertigt. Jedes Segmentblech 1 ist nur an den zwei radialen Seiten 14 des Segments 1, auf zwei Auflagen 31, welche mit zwei T-Trägern 3 (vergleiche Figur 19) verbunden sind, befestigt. Die Flanschbreite F des T-Trägers 3 liegt unten waagerecht, indem die Profilhöhe P des T-Trägers 3 sich in vertikaler Richtung nach oben befindet, wobei der Spannweite S des T-Trägers 3 sich in radialer Richtung befindet und mit Mantel 4 und Zentralrohr 5 verbunden ist. Auf beiden Seiten eines T-Trägers entsteht dadurch sozusagen ein Balkon, auf dem eine radiale Seite 14 des Segmenthordenblechs 1 aufliegt und verbunden wird (vergleiche Figuren 8 und 9, auch in Verbindung mit Figur 7).

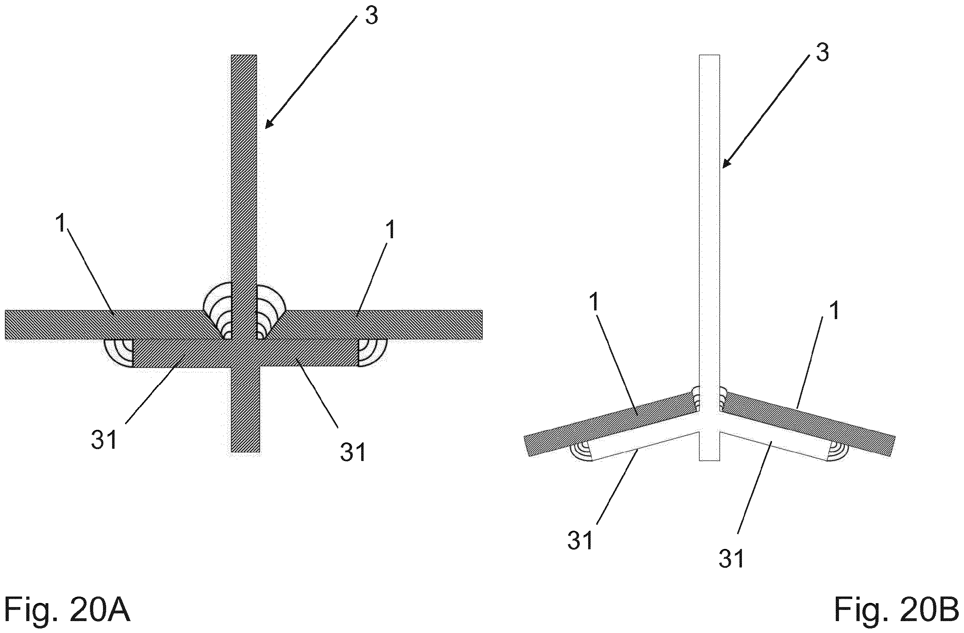

So werden alle Lasten und Spannungen sowie die resultierenden Kräfte aus der Druckdifferenz der Horde nur über die T-Trägerkontaktstellen in den Mantel 4 sowie den Zentralkörper 5 eingeleitet. Diese erfindungsgemäße Aufhebung von Kräften in Umfangsrichtung bezogen auf die Längsachse L gesehen und die damit verbundene Einleitung von Kräften in den Mantel sowie den Zentralkörper wird im Rahmen der Erfindung auch realisiert, wenn Y-Träger oder Kreuzträger als Befestigungsvorrichtung 3 verwendet werden. In Figur 20 sind beispielsweise zwei Ausführungsformen von Kreuzträgern dargestellt. Gemäß Figur 20A hat der Kreuzträger 3 in Richtung seiner Hauptausdehnung gesehen ein Profil eines "+" ("Plus"-Zeichens). Gemäß Figur 20B können die Befestigungsflächen 31 eines Kreuzträgers auch einen Winkel kleiner als 90° mit dem parallel zur Längsachse L verlaufenden vertikalen Kamm einschließen, vergleichbar einem Y-Träger in Relation zu einem T-Träger.

In Figur 2 ist eine Aufsicht auf einen Membranboden 2 gemäß der Erfindung gezeigt, welcher zwischen Mantel 4 (außen) und Zentralrohr 5 (innen) angeordnet ist. Mantel und Zentralrohr sind im Querschnitt zu erkennen. Durch den Mittelpunkt M des Mantels und des Zentralrohrs verläuft die Längsachse L. Am Mantel 4 und am Zentralrohr 5 sind Haltevorrichtungen 3 in Form von T-Trägern befestigt. In Aufsicht sind diese entlang ihrer Spannweite jeweils vom Mantel bis zum Zentralrohr zu sehen. Auf den von den Flanschen des jeweiligen Haltevorrichtung gebildeten Auflagen 31 in Form von "Balkonen" liegen Membransegmente 1 auf (gepunktet dargestellt). Die Membransegmente 1 erstrecken sich in radialer Richtung von der Längsachse L aus gesehen nicht über den gesamten Zwischenraum zwischen Mantel 4 und Zentralrohr 5, so dass zwischen Membransegment 1 und Mantel 4 sowie zwischen Membransegment 1 und Zentralrohr 5 jeweils ein Spalt bestehen bleibt. Um im Betrieb zu verhindern, dass Katalysator durch diesen Spalt fällt, wird außen um das Zentralrohr und innen entlang des Mantels jeweils ein umlaufender Balken 24, 25 befestigt.

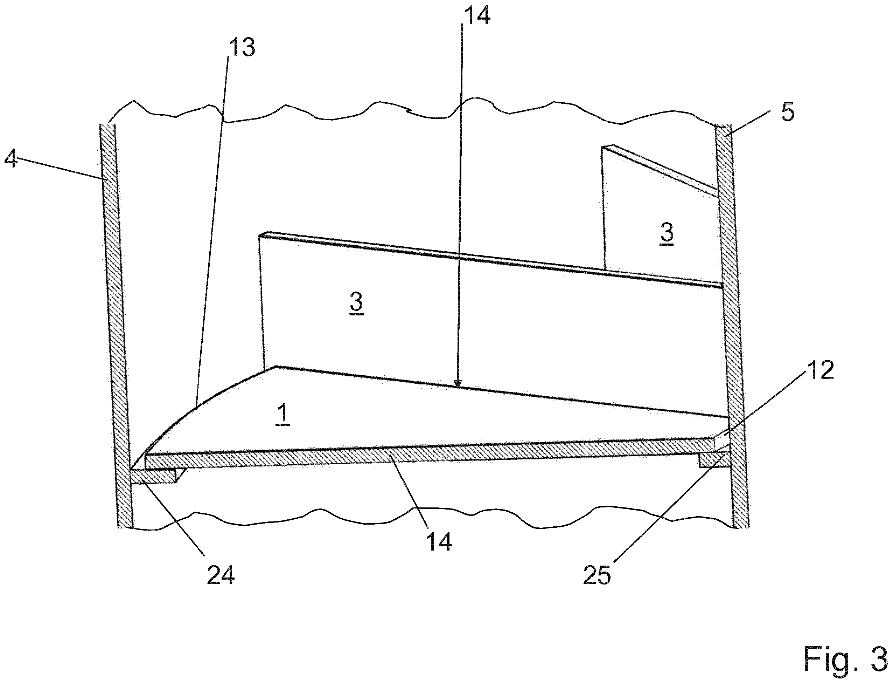

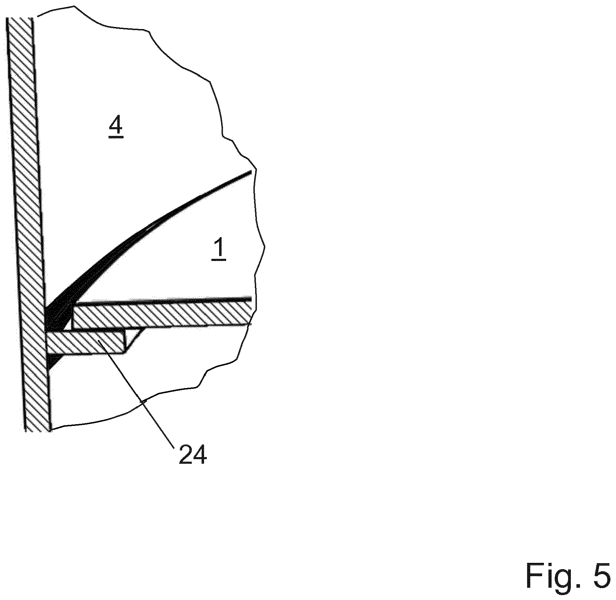

Im Längsschnitt durch einen Bereich links der Längsachse L gemäß der Darstellung in Figur 3 sind diese Balken 24, 25 links und rechts als Vorsprünge aus dem Mantel 4 (links) und dem Zentralrohr 5 (rechts) zu erkennen. Das Segment 1 bildet mit den Balken 24, 25 gasdurchlässige Spalte aus, durch die jedoch keine Partikel einer auf dem Membranboden 2 gehaltenen Katalysatorschüttung fallen können. Dieselben Balken sind auch in Figur 5 und Figur 6 zu erkennen.

Die Haltevorrichtung 3 in Form des T-Trägers ist jeweils mit einer zwischen einer Seitenkante 14 eines benachbarten Membransegments 1 und der diesem Segment zugewandten Seite der Profilhöhe der Haltevorrichtung 3 entlang der Spannweite verlaufenden Befestigung mit den Membransegmenten verbunden (siehe Figur 6). Die Membransegmente 1 sind nicht mit dem Mantel 4 verbunden. Die Membransegmente 1 sind auch nicht mit dem Zentralrohr 5 verbunden. Die Haltevorrichtungen 3 in Form des T-Trägers sind in Richtung der Profilhöhe auf einer Seite mit dem Mantel 4 (siehe Figur 6, linke Seite, dick schwarz dargestellte Befestigungen in Längsrichtung) und auf der gegenüberliegenden Seite mit dem Zentralrohr 5 (in Figur 6 nicht sichtbar) verbunden. Diese Verbindungen übertragen im Wesentlichen die gesamte Belastung in den Mantel 4 und in das Zentralrohr 5 in vertikaler Richtung, das heißt parallel zur Längsachse. Die in Figur 6 erkennbare Befestigung über die Spannweite hinweg, welche links oben in Figur 6 zu erkennen ist als von der dem Betrachter zugewandten Seite der Profilhöhe des T-Trägers zu dessen (nicht sichtbarer) Rückseite hin verlaufender kurzer Abschnitt der Befestigung im Vergleich zu den Abmessungen der vertikal verlaufenden Befestigungsfläche ist im Hinblick auf die mögliche verbleibende Übertragung von Spannungen in Umfangsrichtung dabei zu vernachlässigen.

Die Profilhöhe der T-Träger wird so hoch gewählt, dass die maximale Biegung des T-Trägers kleiner ist als eine nachweisbare Beule des Mantels sowie Zentralrohres. Damit sind eingeleitete radiale Kräfte und Spannungen in dem Mantel sowie in den Zentralkörper zu vernachlässigen (Radialkräfte neutral).

Durch ein gleichzeitiges Integrieren der Profilhöhe der Befestigungsvorrichtung, beispielsweise des T-Trägers, im Betrieb der Erfindung in der dann auf dem Membranboden vorgelegten Katalysatormasse ist die Hordenhöhe und damit die Gesamthöhe des Kontaktkessels reduziert. Gemäß der Erfindung wird zumindest eine Befestigungsvorrichtung 3 - und werden vorzugsweise alle Befestigungsvorrichtungen 3 - auf derselben Seite des Membranbodens positioniert, auf der sich im Betrieb die Katalysatorschüttung befindet. In den Figuren ist dies die "obere" Seite des Membranbodens 2. Indem dann auf der dieser Seite gegenüberliegenden Seite - in den Figuren auf der "unteren" Seite - des Membranbodens 2 gemäß der Erfindung keine Befestigungsvorrichtung angebracht ist, kann die entsprechende Höhe einer derartigen Befestigungsvorrichtung auf der anderen Seite mit Hilfe der Erfindung eingespart werden. Dies wird deutlich im Vergleich mit der bekannten Anordnung, welche in Figur 17 dargestellt ist. Die Stützelemente für das Hordenblech sind unterhalb des Hordenbleches angebracht, und die Katalysatorschüttung wird oben auf das Hordenblech aufgegeben. Sowohl die Höhe der Katalysatorschüttung als auch die Höhe der Stützelemente tragen dann additiv zur Gesamthöhe bei.

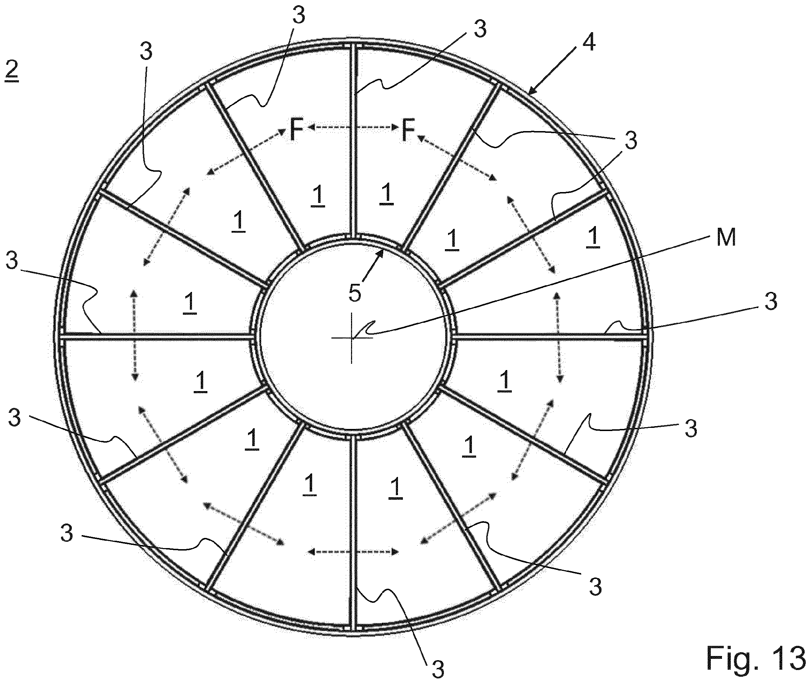

Es wird durch die zentral symmetrische Bauweise des Hordenbleches 2 erreicht, dass alle Gewichte, Lasten und die resultierenden Kräfte aus der Druckdifferenz der Horde als umfangsgerichtete Kräfte in die T-Träger 3 eingeleitet werden. Diese Kräfte heben sich gegenseitig auf, was in Figur 13 illustriert ist (umfangsgerichtete Kräfte sind neutral).
So werden die mechanischen Funktionen des Kontaktkessels einzeln neu definiert.
- Mantel und Zentralrohr haben nur die Funktion Gewicht und vertikale Kräfte zur tragen.
- T-Träger-Profilhöhe sorgt für eine biegefreie Horde und die Übertragung aller Gewichtlasten, Spannungen und resultierende Lasten aus der Druckdifferenz der Horde an dem Mantel und an das Zentralrohr des Kontaktkessels
- T-Träger-Flanschbreite dient als Verbindung zwischen Hordenblechsegment und T-Träger
- Hordenblechsegment dient als Membranboden mit elastischer, geringer plastischer bzw. großer plastischer Verformung zum Tragen der Last resultiert aus Kontaktmasse und Druckdifferenz der Horde

Dadurch sind alle Vorteile von einer Horde mit HordenMembran sowie eine Horde mit Hordenrahmen und Hordenblech beibehalten, ohne dessen Nachteile in Kauf nehmen zu müssen.

In den Figuren 1 sowie 10 bis 12 sind Ausführungsformen der Erfindung gezeigt, welche den Gaseintritt und Gasaustritt im Betrieb des Membranbodens 2 mit einer gasdurchströmten Katalysatorschüttung ermöglicht. Der Membranboden 2 trägt dann die Katalysatorschüttung. In der in Figur 1 dargestellten Ausführungsform weist der Mantel 4 eine Öffnung 63 auf, durch welche im Betrieb Gas in die Horde eintritt. Die Öffnung 63 liegt in der Darstellung oberhalb des Membranbodens 2. Unterhalb des Membranbodens 2 ist eine weitere Öffnung 64 im Mantel 4 angebracht, durch die das Gas nach dem Durchtritt durch die Katalysatorschüttung und den Membranboden 2 aus der Horde austritt.

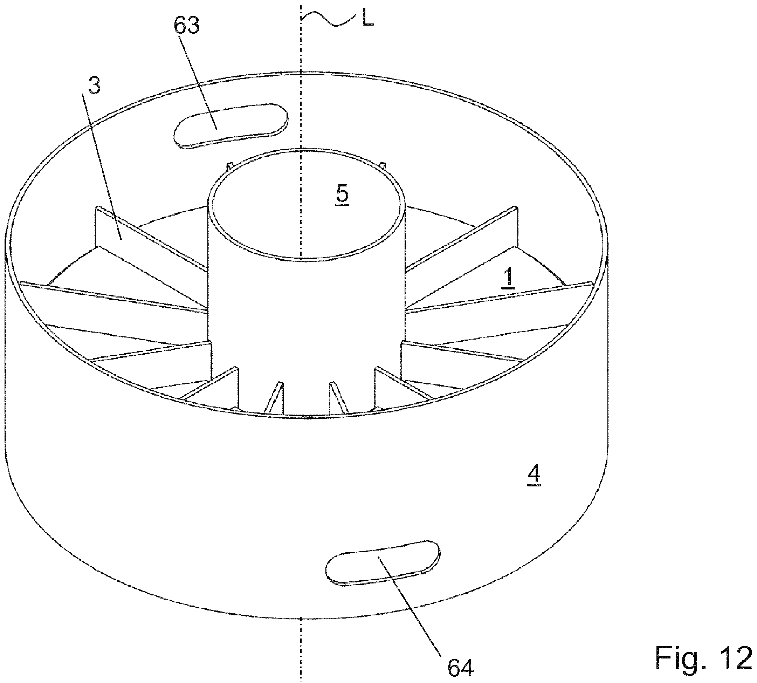

Die Form der Öffnungen 63, 64 kann an die nachgeordneten Bauteile wie beispielsweise Rohrleitungen angepasst und/oder im Hinblick auf das Strömungsverhalten ausgelegt sein. Insbesondere können die Öffnungen neben der in den Figuren 1 sowie 10 bis 11 dargestellten Rechteckform insbesondere auch gerundet gestaltet sein, wie in der in Figur 12 dargestellten Ausführungsform.

Im Rahmen der Erfindung könnte die Strömungsrichtung auch umgekehrt sein mit der Öffnung 64 als Gaseintritt und der Öffnung 63 als Gasaustritt. Dies gilt auch für die Ausführungsformen gemäß den Darstellungen in den Figuren 10 bis 12.

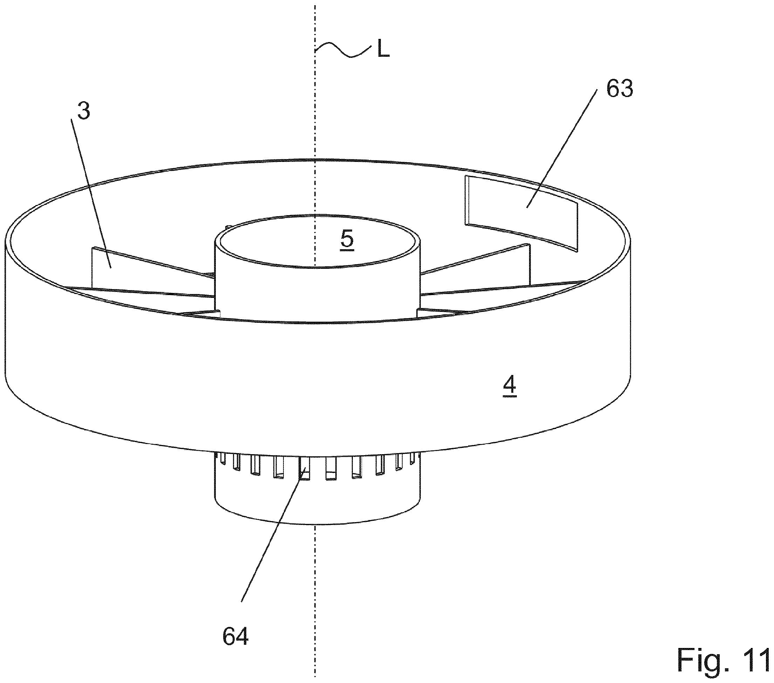

Bei den in den Figuren 10 und 11 dargestellten Ausführungsform weist das Zentralrohr 5 mehrere am Umfang verteilte Öffnungen 63 auf. Der Übersichtlichkeit halber ist nur eine von ihnen mit einem Bezugszeichen versehen. Durch diese Öffnungen 63 kann im Betrieb Gas aus dem Zentralrohr in die Horde eingeleitet werden. Der Gasaustritt erfolgt durch die Öffnung 64 im Mantel 4.

In den Figuren 14 und 15 sind Ausführungsformen für Kontaktkessel 6 dargestellt, welche aus jeweils 4 Horden aufgebaut sind. Die Horden sind schematisch in Schraffur dargestellt und in den Abbildungen mit eingekreisten Zahlen nummeriert. Die Pfeile illustrieren die Gasströmung im Betrieb des Kontaktkessels.

In der in Figur 14 dargestellten Ausführungsform strömt im Betrieb Gas von oben in das Zentralrohr 5 ein und wird durch Öffnungen 63 in die erste Horde geleitet. Nachdem das Gas die Katalysatorschüttung und den Membranboden 2 passiert hat, strömt es über eine Öffnung 64 im Mantel 4 aus dem Kontaktkessel 6 heraus. Über eine weitere Öffnung 63 im Mantel 4 wird Gas in den Kontaktkessel 6 über der zweiten Horde eingeleitet (linke Seite in Figur 14 zwischen erster und zweiter Horde). Nachdem das Gas die Katalysatorschüttung und den Membranboden 2 passiert hat, strömt es über eine Öffnung 64 im Mantel 4 aus dem Kontaktkessel 6 heraus. Über eine weitere Öffnung 63 im Mantel 4 wird Gas in den Kontaktkessel 6 über der dritten Horde eingeleitet (rechte Seite in Figur 14 zwischen zweiter und dritter Horde). Nachdem das Gas die Katalysatorschüttung und den Membranboden 2 passiert hat, strömt es über eine Öffnung 64 im Mantel 4 aus dem Kontaktkessel 6 heraus. Über eine weitere Öffnung 63 im Mantel 4 wird Gas in den Kontaktkessel 6 über der vierten Horde eingeleitet (rechte Seite in Figur 14 oberhalb der vierten Horde). Nachdem das Gas die Katalysatorschüttung und den Membranboden 2 passiert hat, strömt es über eine Öffnung 64 im Mantel 4 aus dem Kontaktkessel 6 heraus (linke Seite in Figur 14 unterhalb der vierten Horde).

Dieses Prinzip gilt auch für die in Figur 15 dargestellte Ausführungsform des Kontaktkessels für die dritte und vierte Horde. Die in Strömungsrichtung des im Betrieb in den Kontaktkessel 6 einströmenden Gases gesehen erste Horde ist bei dieser Ausführungsform die zweite Horde von oben in der Darstellung gemäß Figur 15. Das Gas tritt oben in das Zentralrohr 5 des Kontaktkessels 6 ein und wird durch einen integrierten Rohrbündelwärmeübertrager um dessen Rohre herum geführt. Das Zentralrohr 5 bildet in diesem Bereich den Mantel des Rohrbündelwärmeübertragers. Durch Öffnungen 63 am Umfang des Zentralrohrs 5 tritt das Gas in die erste Horde ein, durchströmt die Katalysatorschüttung auf dem Membranboden 2 und verlässt die erste Horde, um in Öffnungen 64 am Umfang des Zentralrohrs 5, welche im Wesentlichen mittig in dessen Gesamthöhe positioniert sind, wieder in das Zentralrohr einzutreten. Das Gas strömt dann im Zentralrohr 5 nach oben und passiert die Rohre des Rohrbündelwärmeübertragers. Im Kopfraum des Kontaktkessels 6 wird es nach Austritt aus den Rohren des Rohrbündelwärmeübertragers durch Öffnungen 64 heraus auf und durch die Katalysatorschüttung der zweiten Horde geleitet.

Eine solche Verwendung eines Wärmeübertragers bringt für den Betrieb der Anlage mehrere Vorteile mit sich. Da der Wärmeübertrager in dem Konverter die Temperatur hält, also auch bei kurzen Stillständen der Anlage warm bleibt, können Anheizphasen verkürzt werden, und nach einem kurzen Stillstand kann die Anlage direkt wieder in Betrieb gehen. Durch die mit Hilfe des Wärmeübertragers erhöhte Temperatur erfolgt zudem keine beziehungsweise im Vergleich zur Fahrweise ohne Wärmeübertrager weniger Korrosion aufgrund von Kondensatbildung. Durch die in den Konverter integrierte Position des Wärmeübertragers benötigt dieser zudem keine Isolierung. Das Zentralrohr des Konverters dient als Mantel des Wärmetauschers. Im Vergleich zur einer separaten Anordnung von Konverter und Wärmeübertrager in Reihe werden außerdem die dann zusätzlich erforderlichen Rohrleitungen vom Konverter zum Wärmetauscher und zurück gespart. Zudem bleibt bei der in den Konverter integrierten Anordnung des Wärmeübertragers der Mantel des Konverter unberührt, was eine mechanische Stabilität des Konverters zur Folge hat, da weniger "Löcher" in den Mantel des Konverters für Gasein und -austritte erforderlich sind.

Die zweite Horde ist die oberste in der in Figur 15 dargestellten ausführungsform des Kontaktkessels 6. Nachdem das Gas die Katalysatorschüttung und den Membranboden 2 passiert hat, strömt es über eine Öffnung im Mantel 4 aus dem Kontaktkessel 6 heraus. In der gezeigten Ausführungsform mündet diese Öffnung in einen Stutzen 62.

Über einen Stutzen 61 wird das Gas durch eine weitere Öffnung im Mantel in den Kontaktkessel 6 über der dritten Horde eingeleitet (rechte Seite in Figur 15 zwischen erster und dritter Horde). Nachdem das Gas die Katalysatorschüttung und den Membranboden 2 passiert hat, strömt es über eine Öffnung im Mantel 4 durch einen Stutzen 62 aus dem Kontaktkessel 6 heraus. Über eine weitere Öffnung im Mantel 4 wird Gas in den Kontaktkessel 6 über der vierten Horde eingeleitet (rechte Seite in Figur 15 oberhalb der vierten Horde). Nachdem das Gas die Katalysatorschüttung und den Membranboden 2 passiert hat, strömt es über eine Öffnung im Mantel 4 durch einen stutzen 62 aus dem Kontaktkessel 6 heraus (linke Seite in Figur 15 unterhalb der vierten Horde).

### Die bevorzugten Einsatzgebiete:

Schwefelsäureanlagen sind ein Haupteisatzgebiet für diese Erfindung.
Beispielhafte Einsatzgebiete sind die Verwendungen:
- zur Konversion von SO₂ in SO₃ zur Herstellung der Schwefelsäure nach der Schwefelverbrennung
- zur Konversion von SO₂ in SO₃ zur Herstellung der Schwefelsäure in metallurgische Anlagen nach der Röstung
- zur Konversion von SO₂ in SO₃ zur Herstellung der Schwefelsäure, zum Reduzieren des SO₂-Gases in den Abgasreinigungsanlagen

Es ist dem Fachmann ersichtlich, dass die Erfindung nicht auf die vorstehend beschriebenen Beispiele beschränkt ist, sondern vielmehr in vielfältiger Weise variiert werden kann. Insbesondere können die Merkmale der einzeln dargestellten Beispiele auch miteinander kombiniert oder gegeneinander ausgetauscht werden.

### Bezugszeichenliste

- 1: Segment
- 12: Innenkante des Segments
- 13: Außenkante des Segments
- 14: Seitenkanten des Segments
- 15: Wölbung
- 2: Membranboden, Horde, Hordensegmentblech
- 24, 25: Balkenring
- 3: Haltevorrichtung, T-Träger, Y-Träger
- 31: Haltefläche, seitlicher Vorsprung des T-Trägers oder Y-Trägers
- 32: Befestigungsfläche
- 4: Mantel
- 5: Zentralkörper, Zentralrohr, Zentralstange
- 6: Kontaktkessel
- 61: Stutzen für den Gaseintritt
- 62: Stutzen für den Gasaustritt
- 63: Öffnung im Zentralrohr oder im Mantel, durch welche im Betrieb des Kontaktkessels der Gaseintritt erfolgen kann, "Maul",
- 64: Öffnung im Zentralrohr oder im Mantel, durch welche im Betrieb des Kontaktkessels der Gasaustritt erfolgen kann, "Maul"

- F: Flanschbreite des T-Trägers
- P: Profilhöhe des T-Trägers
- S: Spannweite des T-Trägers
- L: Längsachse
- M: Mittelpunkt

## Patentansprüche

1. Membranboden (2) für einen Kontaktkessel (6), insbesondere für die Oxidation von SO₂ zu SO₃, welcher zumindest zwei Segmente (1) umfasst,
wobei
jedes Segment (1) in Aufsicht parallel zu einer Längsachse L eine Projektionsfläche hat, die ein Ausschnitt aus einem Kreisring um einen Mittelpunkt M ist, wobei die Längsachse L durch den Mittelpunkt M verläuft,
und wobei jedes Segment (1) eine dem Mittelpunkt zugewandte Innenkante (12), eine radial vom Mittelpunkt aus gesehen der Innenkante gegenüberliegende Außenkante (13) sowie zwei Seitenkanten (14) aufweist, wobei die Seitenkanten (14) in radialer Richtung vom Mittelpunkt aus gesehen von der Innenkante (12) zur Außenkante (13) die Projektionsfläche des Segments seitlich begrenzen,
wobei zur Bildung des Membranbodens (2) die zumindest zwei Segmente (1) in einer Ebene durch ihre Projektionsflächen einander benachbart angeordnet sind und seitlich entlang ihrer radialen Seitenkanten (14) auf Halteflächen (31) aufliegen, wobei sie mit diesen fest verbunden sind, wobei die Halteflächen (31) durch eine Haltevorrichtung (3) bereitgestellt werden, welche im Wesentlichen die äußere Form eines T-Trägers oder Y-Trägers oder Kreuzträgers hat, wobei die seitlichen Vorsprünge des T-Trägers oder Y-Trägers oder Kreuzträgers die Halteflächen (31) bilden und die Länge des T-Trägers oder Y-Trägers oder Kreuzträgers der Länge der Haltevorrichtung (3) entspricht und gleich lang oder bevorzugt länger ist als die Seitenkante des Segments (1).

2. Membranboden (2) nach Anspruch 1,
**dadurch gekennzeichnet, dass**
zumindest ein Segment (1) im Wesentlichen flach ist und sich im Wesentlichen in einer Ebene senkrecht zur Längsachse erstreckt
und/oder dass zumindest ein Segment (1) eine Wölbung (15) aufweist, welche sich in einer Richtung von den auf den Halteflächen (31) aufliegenden Seitenkanten (14) hin zu den Halteflächen (31) entlang der Längsachse gesehen aus einer Ebene senkrecht zur Längsachse herausstülpt.

3. Membranboden (2) nach Anspruch 1 oder 2,
**dadurch gekennzeichnet, dass**
der Membranboden (2) zwei Balkenringe (24, 25) aufweist,
von denen einer zum Umlauf an der Innenseite eines Mantels (4) eines Kontaktkessels (6) und der andere zum Umlauf an der Außenseite eines Zentralkörpers (5) eines Kontaktkessels (6) ausgebildet ist,
wobei die beiden Balkenringe (24, 25) insbesondere in einer Richtung senkrecht zur Längsachse gesehen auf einer Ebene liegen,
wobei wenigstens ein Segment (1), vorzugsweise mehr als ein Segment (1), besonders bevorzugt alle Segmente (1) auf den beiden Balkenringen (24, 25) frei aufliegt.

4. Membranboden (2) nach einem der vorangegangenen Ansprüche,
**dadurch gekennzeichnet, dass**
jeweils zwei einander benachbarte Segmente (1) symmetrisch in Bezug auf eine Achse radial zur Längsachse L zueinander angeordnet sind.

5. Kontaktkessel (6), insbesondere für die Oxidation von SO₂ zu SO₃, welcher im Wesentlichen zylinderförmig um eine Längsachse L ausgebildet ist und außen von einem rotationssymmetrisch um die Längsachse verlaufenden Mantel (4) und innen von einem rotationssymmetrisch um die Längsachse verlaufenden Zentralkörper (5), nämlich einem Zentralrohr oder einer Zentralstange, begrenzt wird,
wobei der Kontaktkessel (6) zumindest einen Membranboden (2) gemäß einem der Ansprüche 1 bis 4 zwischen dem Zentralkörper (5) und dem Mantel (4) in einer Ebene senkrecht zur Längsachse aufweist,
wobei zumindest zwei Haltevorrichtungen (3) jeweils zwischen dem Zentralkörper (5) und dem Mantel (4) unter Ausbildung von jeweils zumindest einer Befestigungsfläche (32) derart befestigt sind, dass über die Befestigungsfläche (32) in den Zentralkörper (5) beziehungsweise in den Mantel (4) im Wesentlichen allein in einer Richtung parallel zur Längsachse Spannung übertragen wird, welche aus einer Belastung der Segmente (1) in einer Richtung senkrecht auf ihre Projektionsfläche resultiert.

6. Kontaktkessel (6) nach Anspruch 5, **dadurch gekennzeichnet, dass**
zumindest eine Haltevorrichtung (3) im Betrieb des Kontaktkessels (6) in die Katalysatormasse integriert ist, wobei die Katalysatormasse im Betrieb als Katalysatorschüttung auf dem Membranboden aufgebaut ist.

7. Kontaktkessel (6) nach einem der Ansprüche 5 oder 6, **dadurch gekennzeichnet, dass**
jedes Hordenblechsegment (1) im Wesentlichen flach ist.

8. Kontaktkessel (6) nach einem der Ansprüche 5 oder 6 **dadurch gekennzeichnet, dass**
jedes Hordenblechsegment (1) eine Wölbung (15) aufweist.

9. Kontaktkessel (6) nach einem der Ansprüche 5 bis 8, **dadurch gekennzeichnet, dass**
der Kontaktkessel (6) seitlich zumindest einen Stutzen (61) für den Gaseintritt und zumindest einen Stutzen (62) für den Gasaustritt im Betrieb des Kontaktkessels aufweist, wobei der oder die Stutzen (61, 62) insbesondere seitlich in den Mantel (4) des Kontaktkessels (6) münden.

10. Kontaktkessel (6) nach einem der Ansprüche 5 bis 9 **dadurch gekennzeichnet, dass**
der Kontaktkessel (6) zumindest eine Öffnung (63) im Zentralrohr (5) oder im Mantel (4) aufweist, durch welche im Betrieb des Kontaktkessels der Gaseintritt erfolgen kann, und/oder
dass der Kontaktkessel zumindest eine Öffnung (64) im Zentralrohr (5) oder im Mantel (4) aufweist, durch welche im Betrieb des Kontaktkessels der Gasaustritt erfolgen kann.

11. Kontaktkessel (6) nach einem der Ansprüche 5 bis 10, **dadurch gekennzeichnet, dass**
der Kontaktkessel (6) zumindest einen Membranboden (2), insbesondere zumindest zwei Membranböden (2), aufweist und insbesondere aus einer bis sechs Horden mit Membranböden (2) besteht, die vertikal übereinander angeordnet sind.

12. Kontaktkessel (6) nach Anspruch 11, **dadurch gekennzeichnet, dass**
der Kontaktkessel vier bis fünf Horden mit Membranböden (2) aufweist und insbesondere zur Verwendung für die Konvertierung von SO₂ zu SO₃ nach dem Doppelkontaktverfahren vorgesehen ist
oder dass der Kontaktkessel zwei bis fünf Horden mit Membranböden (2) aufweist und insbesondere zur Verwendung für die Konvertierung von SO₂ zu SO₃ nach dem Einfachkontaktverfahren vorgesehen ist.

13. Kontaktkessel (6) nach einem der Ansprüche 5-12 ist **dadurch gekennzeichnet, dass**
der Kontaktkessel für die Verwendung in einem Temperaturbereich zwischen Umgebungstemperatur und 650°C ausgelegt ist.

14. Verwendung eines Kontaktkessels (6) nach einem der Ansprüche 5 bis 13 für die Oxidation von SO₂ zu SO₃.

15. Verwendung nach Anspruch 14, wobei die Temperaturen während der Anheizphase im Bereich zwischen Umgebungstemperatur und 500°C und während des Betriebs zwischen 350°C und 650°C liegen.

## Claims

1. A membrane bottom (2) for a contact vessel (6), in particular for oxidation of SO₂ to SO₃, which comprises at least two segments (1), wherein,
each segment (1), seen in top view parallel to a longitudinal axis L, has a projection surface which is a section of a circular ring about a center M, with the longitudinal axis L extending through the center M;
and wherein each segment (1) has an inner edge (12) facing the center, an outer edge (13) opposite the inner edge seen radially from the center, and two side edges (14), the side edges (14) laterally delimiting the projection surface of the segment from the inner edge (12) to the outer edge (13) in radial direction seen from the center.
wherein in order to form the membrane bottom (2), the at least two segments (1) are arranged adjacent to one another in a plane extending through their projection surfaces and are laterally supported on support surfaces (31) along their radial side edges (14), while being firmly connected thereto, wherein the support surfaces (31) are provided by a holding means (3) which substantially has an outer shape of a T-beam or Y-beam or cross profile beam, wherein the lateral projections of the T-beam or Y-beam or cross profile beam provide the support surfaces (31) and the length of the T-beam or Y-beam or cross profile beam corresponds to the length of the holding means (3) which is equal to or preferably longer than that of the side edge of the segment (1).

2. The membrane bottom (2) according to claim 1,
**characterized in that**
at least one segment (1) is substantially flat and extends substantially in a plane perpendicular to the longitudinal axis; and/or **in that**
at least one segment (1) has a curvature (15) which bulges from a plane lying perpendicular to the longitudinal axis, seen in a direction along the longitudinal axis, from the side edges (14) resting on the support surfaces (31) towards the support surfaces (31).

3. The membrane bottom (2) according to claim 1 or 2,
**characterized in that**
the membrane bottom (2) has two annular ledges (24, 25),
one of which is formed so as to extend circumferentially along the inner surface of a casing (4) of a contact vessel (6) and the other one is formed so as to extend circumferentially along the outer surface of a central body (5) of a contact vessel (6);
wherein the two annular ledges (24, 25) lie in the same plane, in particular seen in a direction perpendicular to the longitudinal axis;
wherein at least one segment (1), preferably more than one segment (1), most preferably all segments (1) are bearing freely on the two annular ledges (24, 25).

4. The membrane bottom (2) according to one of the preceding claims,
**characterized in that**
each pair of adjacent segments (1) is arranged symmetrically to each other with respect to an axis radially to the longitudinal axis L.

5. A contact vessel (6), in particular for oxidation of SO₂ to SO₃, which has a substantially cylindrical shape extending about a longitudinal axis L and which is delimited to the exterior by a rotationally symmetrical casing (4) extending about the longitudinal axis and toward the center by a rotationally symmetrical central body (5) extending about the longitudinal axis, namely a central pipe or a central rod;
wherein the contact vessel (6) comprises at least one membrane bottom (2) according to one of claims 1 to 4 between the central body (5) and the casing (4) in a plane perpendicular to the longitudinal axis;
wherein at least two holding means (3), each defining at least one mounting surface (32), are fastened between the central body (5) and the casing (4) such that stress resulting from a load on the segments (1) in a direction perpendicular to the projection surface thereof is transferred via the mounting surface (32) to the central body (5) or to the casing (4) substantially solely in a direction parallel to the longitudinal axis.

6. The contact vessel (6) according to claim 5, **characterized in that**
at least one holding means (3) is integrated within the catalyst mass during operation of the contact vessel (6), the catalyst mass being provided on the membrane bottom in the form of a catalyst bed during operation.

7. The contact vessel (6) according to one of claims 5 or 6,
**characterized in that**
each tray segment plate (1) is substantially flat.

8. The contact vessel (6) according to one of claims 5 or 6,
**characterized in that**
each tray segment plate (1) has a curvature (15).

9. The contact vessel (6) according to one of claims 5 to 8,
**characterized in that**
the contact vessel (6) comprises at least one port (61) for laterally introducing gas and at least one port (62) for discharging gas during operation of the contact vessel, the one or more ports (61, 62) opening in particular laterally into the casing (4) of the contact vessel (6).

10. The contact vessel (6) according to one of claims 5 to 9,
**characterized in that**
the contact vessel (6) comprises at least one opening (63) in the central pipe (5) or in the casing (4), through which gas can be introduced during operation of the contact vessel; and/or **in that**
the contact vessel comprises at least one opening (64) in the central pipe (5) or in the casing (4), through which gas can be discharged during operation of the contact vessel.

11. The contact vessel (6) according to one of claims 5 to 10,
**characterized in that**
the contact vessel (6) comprises at least one membrane bottom (2), in particular at least two membrane bottoms (2), and in particular consists of one to six trays with membrane bottoms (2), which are arranged vertically one above the other.

12. The contact vessel (6) according to claim 11,
**characterized in that**
the contact vessel comprises four to five trays with membrane bottoms (2) and is in particular intended for use in the conversion of SO₂ to SO₃ according to a double contact process; or **in that**
the contact vessel comprises two to five trays with membrane bottoms (2) and is in particular intended for use in the conversion of SO₂ to SO₃ according to a single contact process.

13. The contact vessel (6) according to one of the claims 5 to 12,
**characterized in that**
the contact vessel is designed for use in a temperature range between ambient temperature and 650 °C.

14. Use of a contact vessel (6) according to one of claims 5 to 13 for oxidation of SO₂ to SO₃.

15. Use according to claim 14,
wherein temperatures are in a range between ambient temperature and 500 °C during the heating phase and between 350 °C and 650 °C during operation.

## Revendications

1. Fond à membrane (2) pour une chaudière à contact (6), en particulier pour l'oxydation de SO₂ en SO₃, lequel comprend au moins deux segments (1),
chaque segment (1) ayant, dans une vue en plan parallèle à un axe longitudinal L, une surface de projection qui est une section d'un anneau circulaire autour d'un point central M, l'axe longitudinal L passant par le point central M,
et chaque segment (1) présentant un bord intérieur (12) tourné vers le point central, un bord extérieur (13) opposé au bord intérieur, vu radialement depuis le point central, ainsi que deux bords latéraux (14), les bords latéraux (14) limitant latéralement la surface de projection du segment, vu dans le sens radial depuis le point central, du bord intérieur (12) vers le bord extérieur (13),
au moins les deux segments (1) étant disposés de manière adjacente l'un à l'autre sur un plan par leurs surfaces de projection pour former un fond à membrane (2), et reposant sur des surfaces de maintien (31) latéralement le long de leurs bords latéraux (14) radiaux, les segments étant fixés avec celles-ci, les surfaces de maintien (31) étant mises à disposition par un dispositif de maintien (3) qui a essentiellement la forme extérieure d'un support en T ou d'un support en Y ou d'un support en croix, les saillies latérales du support en T ou du support en Y ou du support en croix formant les surfaces de maintien (31) et la longueur du support en T ou du support en Y ou du support en croix correspondant à la longueur du dispositif de maintien (3) et étant identique ou de préférence supérieure à celle du bord latéral du segment (1).

2. Fond à membrane (2) conformément à la revendication 1, **caractérisé en ce que**
au moins un segment (1) est essentiellement plat et s'étend essentiellement sur un plan perpendiculaire à l'axe longitudinal
et/ou **en ce que** au moins un segment (1) présente une courbure (15) qui dépasse depuis un plan perpendiculaire à l'axe longitudinal, vu dans une direction depuis les bords latéraux (14) reposant sur les surfaces de maintien (31) vers les surfaces de maintien (31) le long de l'axe longitudinal.

3. Fond à membrane (2) conformément à la revendication 1 ou 2,
**caractérisé en ce que**
le fond à membrane (2) présente deux anneaux à barres (24, 25),
dont l'un est formé pour circuler sur la face intérieure d'une garniture (4) d'une chaudière à contact (6) et l'autre pour circuler sur la face extérieure d'un corps central (5) d'une chaudière à contact (6),
les deux anneaux à barres (24, 25) se trouvant sur un plan, en particulier vu dans une direction perpendiculaire à l'axe longitudinal,
au moins un segment (1), de préférence plus d'un segment (1), en particulier de préférence tous les segments (1) reposant librement sur les deux anneaux à barres (24, 25).

4. Fond à membrane (2) conformément à l'une des revendications précédentes,
**caractérisé en ce que**
respectivement deux segments (1) adjacents l'un à l'autre sont disposés symétriquement par rapport à un axe dans le sens radial par rapport à l'axe longitudinal L.

5. Chaudière à contact (6), en particulier pour l'oxydation de SO₂ en SO₃, laquelle est essentiellement en forme cylindrique autour d'un axe longitudinal L et limitée à l'extérieur par une garniture (4) passant symétriquement en rotation autour de l'axe longitudinal et à l'intérieur par un corps central (5) passant symétriquement en rotation autour de l'axe longitudinal, à savoir un tube central ou une tige centrale,
la chaudière à contact (6) présentant au moins un fond à membrane (2) conformément à l'une des revendications 1 à 4 entre le corps central (5) et la garniture (4) sur un plan perpendiculaire à l'axe longitudinal,
au moins deux dispositifs de maintien (3) étant respectivement fixés entre le corps central (5) et la garniture (4) afin de former respectivement au moins une surface de fixation (32) de façon à ce qu'une tension résultant d'une charge des segments (1) dans une direction perpendiculaire à leur surface de projection soit transmise par la surface de fixation (32) dans le corps central (5) et/ou dans la garniture (4) essentiellement seulement dans une direction parallèle à l'axe longitudinal.

6. Chaudière à contact (6) conformément à la revendication 5,
**caractérisée en ce que**
au moins un dispositif de maintien (3) est intégré dans la masse catalytique pendant le fonctionnement de la chaudière à contact (6), la masse catalytique étant constituée sur le fond à membrane comme masse en vrac de catalyseur pendant le fonctionnement.

7. Chaudière à contact (6) conformément à l'une des revendications 5 ou 6,
**caractérisée en ce que**
chaque segment de tôle de claie (1) est essentiellement plat.

8. Chaudière à contact (6) conformément à l'une des revendications 5 ou 6,
**caractérisée en ce que**
chaque segment de tôle de claie (1) présente une courbure (15).

9. Chaudière à contact (6) conformément à l'une des revendications 5 à 8,
**caractérisée en ce que**
la chaudière à contact (6) présente, sur le côté, au moins une tubulure (61) pour l'entrée de gaz et au moins une tubulure (62) pour la sortie de gaz pendant le fonctionnement de la chaudière à contact, la ou les tubulures (61, 62) débouchant en particulier sur le côté dans la garniture (4) de la chaudière à contact (6).

10. Chaudière à contact (6) conformément à l'une des revendications 5 à 9,
**caractérisée en ce que**
la chaudière à contact (6) présente au moins une ouverture (63) dans le tube central (5) ou dans la garniture (4), par laquelle l'entrée de gaz peut s'effectuer pendant le fonctionnement de la chaudière à contact et/ou
**en ce que** la chaudière à contact présente au moins une ouverture (64) dans le tube central (5) ou dans la garniture (4), par laquelle la sortie de gaz peut s'effectuer pendant le fonctionnement de la chaudière à contact.

11. Chaudière à contact (6) conformément à l'une des revendications 5 à 10,
**caractérisée en ce que**
la chaudière à contact (6) présente au moins un fond à membrane (2), en particulier au moins deux fonds à membrane (2), et se compose en particulier d'une à six claies avec des fonds à membrane (2) qui sont disposées verticalement les unes au-dessus des autres.

12. Chaudière à contact (6) conformément à la revendication 11,
**caractérisée en ce que**
la chaudière à contact présente quatre à cinq claies avec des fonds à membrane (2) et est prévue en particulier pour une utilisation pour la conversion de SO₂ en SO₃ selon le procédé du double contact
ou **en ce que** la chaudière à contact présente deux à cinq claies avec des fonds à membrane (2) et est prévue en particulier pour une utilisation pour la conversion de SO₂ en SO₃ selon le procédé du simple contact.

13. Chaudière à contact (6) conformément à l'une des revendications 5 à 12,
**caractérisée en ce que**
la chaudière à contact est conçue pour être utilisée dans une plage de températures comprise entre la température ambiante et 650°C.

14. Utilisation d'une chaudière à contact (6) conformément à l'une des revendications 5 à 13 pour l'oxydation de SO₂ en SO₃.

15. Utilisation conformément à la revendication 14,
les températures se situant entre la température ambiante et 500°C pendant la phase de préchauffage et entre 350°C et 650°C pendant le fonctionnement.
